# EUROPEAN PATENT SPECIFICATION

(11) **EP 3 426 913 B1**
(45) Date of publication and mention of the grant of the patent: **30.10.2019**
(21) Application number: 17709690.6
(22) Date of filing: 09.03.2017
(51) Int. Cl.: F03B 13/08

(54) **AN ENERGY GENERATING ARRANGEMENT POWERED BY TIDAL WATER AND A METHOD FOR PROVIDING SUCH AN ARRANGEMENT**
DURCH GEZEITENWASSER BETRIEBENE ENERGIEERZEUGUNGSANORDNUNG UND VERFAHREN ZUR BEREITSTELLUNG SOLCH EINER ANORDNUNG
AGENCEMENT DE GÉNÉRATION D'ÉNERGIE ALIMENTÉ PAR LES MARÉES ET PROCÉDÉ DESTINÉ À PRODUIRE UN TEL AGENCEMENT

(30) Priority: 11.03.2016 NO 20160419
(43) Date of publication of application: 16.01.2019
(73) Proprietor: Tidetec AS, 1165 Oslo (NO)
(72) Inventor: KOLLANDSRUD, Arne, 1165 Oslo (NO); WIN, Sai, Thein, 0165 Oslo (NO); AMLAND, Joachim, 1392 Vettre (NO); HERNÆSS, Snorre, 1475 Finnstadjordet (NO)
(74) Representative: Onsagers AS
(86) International application number: PCT/EP2017/055592
(87) International publication number: WO 2017/153540

(56) References cited:
- WO-A1-2005/017349
- DE-C- 417 570
- US-A- 4 468 153
- US-A1- 2009 123 283

## Description

### FIELD OF THE INVENTION

The present invention relates to an energy generating arrangement powered by tidal water and a method for providing such an energy generating arrangement.

### BACKGROUND OF THE INVENTION

The global community is facing major climate changes, and one important challenge is to replace fossil fuels with renewable energy sources, such as tidal power.

An energy generating arrangement powered by tidal water is previously known from WO-2005/017349. This document teaches an apparatus for generating energy from a flow of water as a result of tidal forces. The apparatus comprises a turbine connected to a generator, and two water masses located on their respective side of the turbine. The turbine is arranged to be turned about a vertical axis. The position of the turbine is adjusted depending on the direction of flow prevailing at any given time between the first and the second flow space.

The previous arrangement required a complicated bearing arrangement, with larger radius and high construction cost. In addition, the bearing arrangement was placed where sediments naturally ended up, thereby causing wear on bearings, requiring more frequent service intervals.

DE-417 570 discloses a tidal power generating arrangement. A turbine is arranged to be rotated by flowing water. The rotation of the turbine causes the operation of a water pump which provides pressurized water that may in turn impel an electric generator. The turbine and the water pump are included in a housing which is rotatable about a horizontal axis. The housing may be rotated in accordance with high and low tides, to ensure that flowing water enters the input side of the turbine and exits from the output side of the turbine.

This background art arrangement involves several power dissipating stages or elements, including the water pump, the water flow provided by the water pump, water conduits with several flow restricitons, and a water motor. Hence, its overall power efficiency will be limited.

### SUMMARY OF THE INVENTION

An object of the invention is to provide an improved energy generating arrangement powered by tidal water and a method for providing such an arrangement, which may alleviate or overcome at least some of the above-mentioned disadvantages.

The invention has been defined in the independent claims. Advantageous embodiments and further features are set forth in the dependent claims.

### BRIEF DESCRIPTION OF THE DRAWINGS

In what follows, the invention will be described in more detail as a non-limiting example, illustrated in the appended drawings and explained in the following detailed description. Where possible, identical or corresponding elements have been indicated by means of the same reference designations in the drawings.
Figure 1 is a cross-sectional view illustrating principles of an energy generating arrangement powered by tidal water.
Figure 2 is a cross-sectional view illustrating a detail of figure 1.
Figure 3 is a cross-sectional view illustrating principles of a cylindrical assembly.
Figure 4 is a perspective view illustrating certain features of the cylindrical assembly.
Figure 5 is a perspective view illustrating certain features of the cylindrical assembly.

### DETAILED DESCRIPTION OF EMBODIMENTS OF THE INVENTION

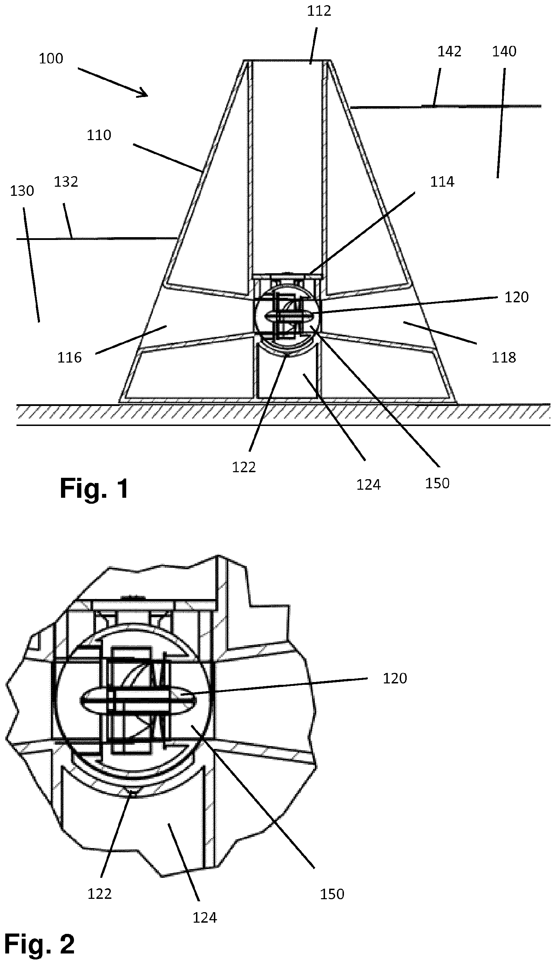

Figure 1 is a schematic diagram illustrating an energy generating arrangement 100 powered by tidal water.

The arrangement 100 includes a turbine unit 120, arranged in a fixed structure 110 which separates a first water mass 130 and a second water mass 140.

The fixed structure 110 may be a water barrier which wholly or partly constitutes an obstruction between a first water mass 130 on one side of a sound and a second water mass 140 on the other side of the sound. Alternatively, the fixed structure 110 may be a part of such a water barrier. In particular, the fixed structure 110 may constitute a water barrier module, and the water barrier may be constructed using a plurality of such interconnected modules.

An example of such a water barrier may be a barrage, lagoon or dam which essentially blocks off water across the whole cross-section of the sound, with the exception of through-flow areas in the barrier, where turbines may be arranged for harnessing the water flow.

However, in this document water barriers should also be understood to mean structures which only partly constitute an obstruction to flowing water. Other examples of water barriers may therefore be a breakwater, a partly submerged bridge, a flood barrier, sluices or the like. The water barrier may e.g. be located offshore or between parts of the mainland, or between a mainland area and an island, or between islands.

The arrangement and method disclosed herein are particularly useful in locations where the tidewater causes substantial water currents or substantial head difference from low tide to high tide, typically in narrow and shallow sounds.

In figure 1, the level 142 of the second water mass 140 has been illustrated to be higher than the level 132 of the first water mass 130. Under an opposite tidal condition the level of the first water mass 130 may instead be higher than the level of the second water mass 140. Hence, tidal activity leads to a change in the dominant direction of water flowing between the reservoirs or water masses, i.e., through the fixed structure 110.

In order to guide the water flow between the reservoirs or water masses, the fixed structure 110 is provided with a first, substantially horizontal duct 116 which extends from the first water mass 130 into a central cavity in the fixed structure, wherein the turbine unit 120 is arranged. Likewise, the fixed structure 110 is provided with a second, substantially horizontal duct 118 which extends from the second water mass 140 into the central cavity in the fixed structure 110, wherein the turbine unit 120 is arranged.

The first duct 116 and the second duct 118 may advantageously be funnel-shaped, in such a way that each duct's cross-sectional area is wider at the outer portion of the fixed structure 110, closer to the corresponding water mass, than at the central portion of the fixed structure 110, closer to the turbine unit 120. The cross-section of the first and second ducts may advantageously be circular throughout the length of each duct, although other possibilities exist.

Enabling the turbine unit 120 to turn within the cavity of the fixed structure 110 makes it possible to use a turbine that has a flow direction dependent efficiency. More specifically, it allows optimizing the turbine for one-directional flow. This will usually lead to an overall high efficiency of the energy generating arrangement 100.

Allowing the turbine unit 120 to turn within the fixed structure 110 makes it possible to use a mechanically simpler turbine with less need for regulation features, while still obtaining overall good efficiency. Also, the turbine may be used as a pump with better efficiency in both flow directions than a fixed turbine unit.

The turbine unit 120 may include a rotor with turbine blades, a shaft connected to the rotor, which will rotate when surrounding, flowing water acts on the rotor's blades, and an electric machine driven by the rotating shaft. The electric machine may be an electric generator. "Turning the turbine unit", as used herein, may mean turning the entire turbine unit, i.e. the assembly comprising rotor, shaft and electric machine, in such a way that the rotor is positioned in a different direction with respect to the surrounding water.

Many different types of turbine types may be employed for the turbine unit 120. For instance, a compact turbine such as the Straflo type turbine is suitable and simple to integrate into the energy generating arrangement 100. Other suitable turbines include Kaplan bulb turbines, other types of Kaplan turbines with or without guide vanes, Straflo matrix turbines, Hydro matrix turbines, VLH turbines and more.In the present invention, as opposed to the background art disclosed in WO-2005/017349, the turbine unit 120 is arranged to be turned within the fixed structure 110 about a horizontal or substantially horizontal axis 180. "Substantially horizontal" includes horizontal for practical purposes, including a tolerance range of, e.g., +/- 1 degree or +/- 2 degrees.

Possible advantages of the turning of the turbine unit about a substantially horizontal axis may include:
The turning mechanism may be simplified, with less friction surfaces, smaller diameters for the turning shaft and less moving parts in the overall system.

Any bearings can be placed dry, out of water.

Turning the turbine unit about a substantially horizontal axis may facilitate easier access for maintenance, replacement and inspection of critical parts.

Other advantages may also be recognized by the skilled person, e.g. by studying the present disclosure and/or by practicing the invention.

Advantagously, the turbine unit 120 is mounted in a substantially cylindrical assembly or casing 150 with a substantially horizontal axis. Various aspects of the cylindrical assembly 150 have been illustrated in closer detail in figures 2, 3, 4 and 5.

The turbine type will influence size of the fixed structure, length and size of inflow and outflow duct, and size of cylindrical assembly 150. Simple turbines like VLH will not require inflow and outflow duct, and therefore a much reduces size of cylindrical assembly, only needing the shaft 160.

In some cases the cylindrical assembly 150 is not provided. For a turbine unit 120 that not require an inflow- and outlet duct a cylindrical assembly 150 around the turbine unit is not needed. In these cases the turbine unit 120 itself, or a fitting (plate or ring) around the turbine unit can be fit with an horizontal axel that the turbine unit turns around. The cylindrical assembly 150 may be fitted with weights to ensure a balanced center of gravity, in order to reduce the necessary force/torque to turn the cylindrical assembly 150.

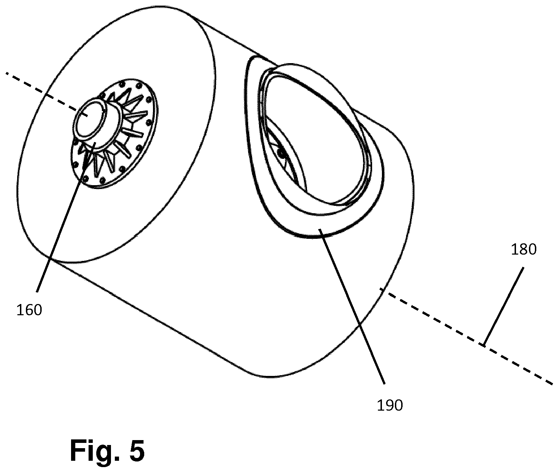

The cylindrical assembly 150 may be a turret. The turbine unit 120 may be mounted within the cylindrical assembly 150 and locked in place by means of a locking lip 190, which is shown in closer detail in figure 5. During assembly, the turbine unit 120 is first mounted in the cylindrical assembly 150, then the locking lip 190 closes off the cylindrical assembly 150 and locks the turbine unit 120 in. This concept may also provide a disassembly possibility, for instance in case of a turbine exchange, due to service, malfunction or failure.

The cylindrical assembly 150 may be provided with one or more manholes to give a human access to the inner part of the construction. Such a manhole may e.g. be provided through the shaft 160, which may be pipe-shaped for i.a. this purpose.

The cylindrical assembly 150 may be manufactured by use of various types of materials, e.g. metal, such as steel, concrete, or fiberglass.

The cylindrical assembly 150 and the locking lip 190 may be manufactured by use of various types of materials, e.g., metal, such as steel, and fiberglass.

The arrangement of the turbine unit 120 within a cylindrical assembly 150, e.g., a turret, may have several advantages:
The enclosure of the whole turbine unit in the cylindrical assembly 150, such as the turret, makes it possible to shape the inlet and outlet of the cylindrical assembly 150 asymmetrically. This may have the effect of increasing overall efficiency in generating mode.

Advantageously, the fixed structure 110 is provided with a substantially cylindrical cavity which is configured to accomodate the cylindrical assembly 150 in such a way that the cylindrical assembly 150 may be turned within the cavity.

The fixed structure 110 may be manufactured by use of various types of materials, e.g., concrete, metal, such as steel, and fiberglass.

The cylindrical assembly 150 may be orientated in a configuration such that parts or itself in its entirety may be removed from the fixed structure 110 or installed into the fixed structure by lifting. Lifting may be done by the help of buoyancy in the cylindrical assembly 150 so that no, or less, mechanical force is needed. Parts that can be removed are the cylindrical assembly 150, the turbine unit 120 or the locking lip 190 To this end, the cylindrical assembly 150 may be provided with one or more watertight cavities, arranged and dimensioned in order to adjust the buoyancy of the cylindrical assembly.

The fixed structure 110 may be provided with a vertical duct 112 which extends from the top of the fixed structure down to the cylindrical cavity that is provided for accomodating the cylindrical assembly 150. The vertical duct 112 may be provided on its inside with tracks that may guide the cylindrical assembly 150, and/or its shaft 160, into the correct position during installation. These tracks may also facilitate lift out during disassembly.

The fixed structure 110, in particular a lower portion of the cavity configured to accomodate the cylindrical assembly 150, may be provided with a gap 122 for collection of sediments during operation. At the bottom of this gap 122 there may be a drain hole that can be opened for easy drainage of sediments into a lower compartment 124 of the fixed structure 110.

The fixed structure 110 may be provided with a lip to enclose the space between the first 116 and second 118 ducts and the cylindrical assembly 150 comprising the turbine unit 120.

The fixed structure 110 may also comprise another lip that enables scraping of the outside wall of the cylindrical assembly 150.

The cylindrical assembly 150 may comprise another lip that enables scraping of the inside wall of the fixed structure 110.

The fixed structure 110 may be provided with access areas providing access to the turbine unit 120 from the top and from the sides of the cylindrical assembly 150.

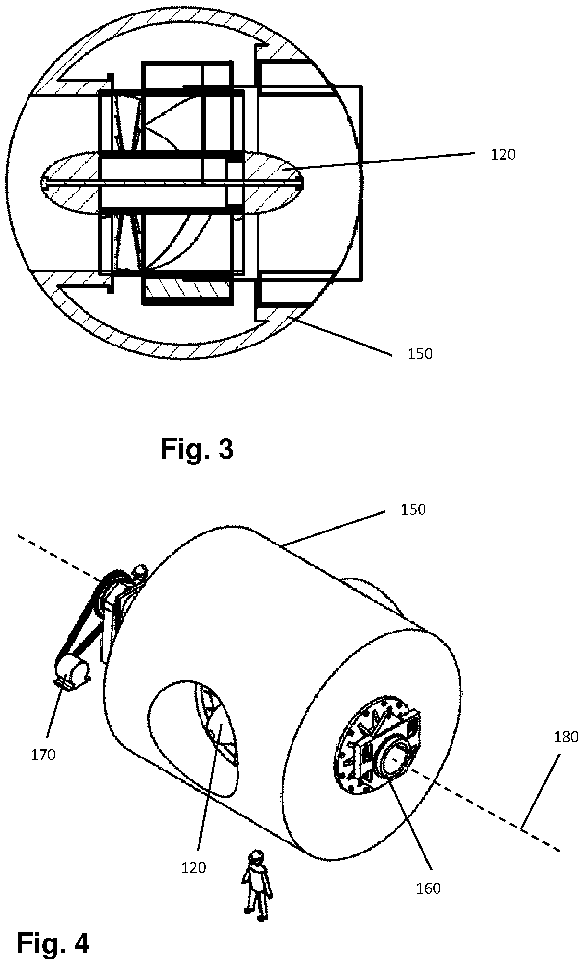

The cylindrical assembly 150 may include a shaft 160 along its rotational axis 180, particularly shown in figures 4 and 5. The shaft 160 may not necessarily pass through the cylindrical assembly, instead it may e.g. be formed by flanges mounted on each of the two base areas of the cylindrical assembly 150.

The shaft 160 may advantageously be supported on the fixed structure 110, in particular by means of bearings arranged between the shaft 160 and the fixed structure 110.

The shaft 160 may be hollow to comprise electrical/hydraulically equipment and cabling to the generator and turbine. Such cabling may extend from the generator to external power circuitry such as a transformer, an inverter, a power converter and/or a power grid. The shaft 160 may also be used as an access to the inner part of the cylindrical assembly 150.

The shaft 160 may be turned during construction of the energy generating arrangement 100.

The shaft 160 may comprise a gear that is connected to the driving device 170. When appropriate, the shaft 160 may comprise a fitting to hydraulic pumps for the driving device 170.

The shaft 160 may be manufactured by the use of metal, e.g. steel, or fiberglass.

The friction area where the shaft is in interaction with the bearing may be of a hard metal or a self-lubricating material (e.g. Bronze graphite).

Each bearing may take forces in both horizontal and vertical direction. The bearings may be manufactured of a polymer or self-lubricating metal.

The bearings may seal between the fixed structure 110 and the cylindrical assembly 150. The bearings may support the cylindrical assembly 150 and are able to withstand significant vibration.

The energy generating arrangement 100 may further comprise a driving device 170 for turning the cylindrical assembly 150 within the fixed structure 110. An example of a driving device 170 has been illustrated in figure 4.

The driving device 170 may comprise an electrical motor with a rotating shaft connected to a gear or transmission device, powered by an electric power supply. Alternatively, the driving device 170 may comprise linked hydraulic pistons that are connected to a periphery of the shaft 160, powered by a hydraulic power supply, i.e., hydraulic fluid under pressure.

The driving device 170 may include a chain drive connected between the shaft 160 and the motor, the motor being attached to the fixed structure.

Advantageously, the energy generating arrangement 100 may further comprise a control device for controlling the driving device. The control device may be configured to control the driving device to turn the cylindrical assembly 150, and thus the turbine unit 120, in both directions, or in one direction only.

The control device may e.g. be configured to turn the cylindrical assembly 150 by an angle of 90, 180, 270 and 360 degrees, in one or both directions. Regular operating positions of the cylindrical assembly includes 0 degrees and 180 degrees, which both correspond to horizontal positions of the turbine unit 120. Free movement beyond these regular operating positions or angles may i.a. facilitate access to all sides of the turbine during maintenance.

The cylindrical assembly 150 may advantageously have a "locked mode" in the regular operating positions or angles (0 and 180 degrees), in particular when the turbine is operating. In this mode the cylindrical assembly 150 may be locked with pins, brakes or by other suitable locking means.

The control device may advantageously be configured to turn (180 degrees) the cylindrical assembly 150 four times per 24 hours, following tidal cycles, during normal operation. Alternatively, the control device may be configured to turn the cylindrical assembly 150 another number of times per 24 hours, in particular more than four times, or the control device may be configured to turn the cylindrical assembly 150 sporadic or on demand.

The control device may advantageously be configured to turning the cylindrical assembly 150 90 degrees, 270 degrees or 360 degrees if needed, with the purpose of maintenance and/or for access, and/or for removal of sediments around the cylindrical assembly 150.

In embodiments wherein the shaft 160 includes cabling to the generator, the control device may advantageously be configured to turn the cylindrical assembly in both directions, in such a way that the cabling in the shaft is not twisted excessively. For instance, the control device may be configured to turn the cylindrical assembly back and forth within an interval of between 0 and 360 degrees, or between 0 and 270 degrees, or between 0 and 180 degrees.

The invention also relates to a method for providing the energy generating arrangement 100 powered by tidal water as disclosed above. The method comprises the steps of:
mounting a turbine unit 120 in a fixed structure 110 which separates a first 130 and a second 140 water masses, and
arranging the turbine unit 120 to be turned within the fixed structure 110 about a substantially horizontal axis 180.

The step of mounting the turbine unit 120 in the fixed structure 110 advantageously includes mounting the turbine unit 120 in a substantially cylindrical assembly 150 with a substantially horizontal axis 180, the cylindrical assembly 150 including a shaft 160.

Advantageously, the turbine unit 120 includes a rotor with turbine blades and a rotor shaft which will rotate when surrounding, flowing water acts on the rotor's turbine blades. The turbine unit 120 advantageously further includes an electric generator which is driven by the rotor shaft, an the shaft 160 of the cylindrical assembly 150 is advantageously hollow and comprises cabling to the generator, in the same way as has been described with reference to the energy generating arrangement 100 above.

The fixed structure 110 may be of a type as disclosed above with reference to figures 1-5. The fixed structure 110 may, e.g. be provided as a plurality of preassembled water barrier modules, which are interconnected during deployment, i.e. when assembled between the first 130 and second 140 water masses. The fixed structure, which may include the plurality of water barrier modules, may be positioned on a supporting base, which may e.g. be a sea bottom, or advantageously a fundament that has been provided on the sea bottom.

The step of mounting of the turbine unit 120 in the fixed structure 110 may include mounting the turbine unit 120 in a cylindrical assembly 150, locking the turbine unit in place by means of, e.g., a locking lip 190, and arranging the cylindrical assembly 150 with the turbine unit 120 within a central cavity in the fixed structure.

The cylindrical assembly 150 with the turbine unit 120 and the locking lip 190 may then be lowered into a vertical duct 112 which extends from the top of the fixed structure 110 down to the central cylindrical cavity in the fixed structure 110. This lowering may be facilitated by means of tracks provided on the inside of the vertical duct 112.

The turbine may also work as a pump. In this operation mode the electric machine in the turbine may be operating as an electric motor. The turbine, working as a pump, may have a better efficiency in both directions than a conventional one-way turbine used as a pump. A one way turbine working like a pump needs to operate in both reverse pumping mode and forward pumping mode to be able to operate in both directions, the efficiency of these two operating modes is by nature different, due to shape of blades, guide vanes and shape of inner wall between turbine and fixed structure. For this invention the turbine only needs to operate in one of these modes, reverse pumping or forward pumping, and one turns the cylindrical assembly to ensure the optimum pumping efficiency in both directions.

## Claims

1. An energy generating arrangement (100) powered by tidal water, comprising
a turbine unit (120) mounted in a fixed structure (110) which separates a first (130) and a second (140) water masses, the turbine unit (120) being arranged to be turned within the fixed structure (110) about a substantially horizontal axis (180),
the turbine unit (120) being mounted in a substantially cylindrical assembly (150) with a substantially horizontal axis (180), the cylindrical assembly (150) including a shaft (160),
the turbine unit including a rotor with turbine blades and a rotor shaft which will rotate when surrounding, flowing water acts on the rotor's turbine blades,
**characterized in that**
the turbine further includes an electric generator which is driven by the rotor shaft, and
the shaft (160) of the cylindrical assembly (150) is hollow and comprises cabling to the generator.

2. Arrangement according to claim 1,
wherein the turbine unit (120) has a flow direction dependent efficiency.

3. Arrangement according to claim 2,
wherein the fixed structure (110) is provided with a substantially cylindrical cavity, configured to accomodate the cylindrical assembly (150) in such a way that the cylindrical assembly (150) may be turned within the cavity.

4. Arrangement according to claim 3,
wherein the shaft is supported on the fixed structure.

5. Arrangement according to claim 4,
wherein the support includes bearings.

6. Arrangement according to one of the claims 1-5,
further comprising a driving device (170) for turning the cylindrical assembly (150) within the fixed structure (110).

7. Arrangement according to claim 6,
further comprising a control device for controlling the driving device.

8. Arrangement according to one of the claims 1-7,
wherein the fixed structure (110) is provided with a first duct (116) which extends from the first water mass (130) into a central cavity in the fixed structure (110), and a second duct (118) which extends from the second water mass (140) into the central cavity in the fixed structure (110), the turbine unit (120) being arranged within the central cavity in the fixed structure (110).

9. Arrangement according to claim 8,
wherein the first (116) and second (118) ducts are funnel-shaped, with a cross-sectional area that is wider at an outer portion of the fixed structure (110) than at the central portion of the fixed structure (110).

10. Arrangement according to one of the claims 8-9,
wherein the fixed structure (110) is provided with a vertical duct (112) which extends from the top of the fixed structure (110) down to the cylindrical cavity in the fixed structure (110).

11. Arrangement according to claim 10,
wherein the vertical duct (112) is provided with an arrangement for guiding the cylindrical assembly (150) and/or its shaft (160) during assembly or disassembly.

12. Arrangement according to one of the claims 8-11,
wherein a lower portion of the central cavity in the fixed structure (110) is provided with a gap (122) whit a drain hole at its bottom, allowing drainage of sediments into a lower compartment (124) of the fixed structure (110).

13. A method for providing an energy generating arrangement (100) powered by tidal water, the method comprising the steps of:
mounting a turbine unit (120) in a fixed structure (110) which separates a first (130) and a second (140) water masses, including mounting the turbine unit (120) in a substantially cylindrical assembly (150) with a substantially horizontal axis (180), the cylindrical assembly (150) including a shaft (160),
and
arranging the turbine unit (120) to be turned within the fixed structure (110) about a substantially horizontal axis (180),
the turbine unit (120) including a rotor with turbine blades and a rotor shaft which will rotate when surrounding, flowing water acts on the rotor's turbine blades,
the turbine unit (120) further including an electric generator which is driven by the rotor shaft,
wherein the shaft (160) of the cylindrical assembly (150) is hollow and comprises cabling to the generator.

## Patentansprüche

1. Energieerzeugungsanordnung (100), angetrieben durch Gezeitenwasser, umfassend:
eine Turbineneinheit (120), die in einer festen Struktur (110) montiert ist, die eine erste (130) und eine zweite (140) Wassermasse trennt, wobei die Turbineneinheit (120)) dazu eingerichtet ist, innerhalb der festen Struktur (110) um eine im Wesentlichen horizontale Achse (180) gedreht zu werden,
wobei die Turbineneinheit (120) in einer im wesentlichen zylindrischen Anordnung (150) mit einer im wesentlichen horizontalen Achse (180) montiert ist, wobei die zylindrische Anordnung (150) eine Welle (160) enthält,
die Turbineneinheit einen Rotor mit Turbinenschaufeln und einer Rotorwelle umfasst, die sich dreht, wenn umgebendes strömendes Wasser auf die Turbinenschaufeln des Rotors einwirkt,
**dadurch gekennzeichnet, dass**
die Turbine weiterhin einen elektrischen Generator umfasst, der von der Rotorwelle angetrieben wird, und
die Welle (160) der zylindrischen Anordnung (150) hohl ist und eine Verkabelung zu dem Generator aufweist.

2. Anordnung nach Anspruch 1, bei der die Turbineneinheit (120) einen strömungsrichtungsabhängigen Wirkungsgrad aufweist.

3. Anordnung nach Anspruch 2, bei der die feste Struktur (110) mit einem im Wesentlichen zylindrischen Hohlraum versehen ist, der dazu eingerichtet ist, die zylindrische Anordnung (150) derart aufzunehmen, dass die zylindrische Anordnung (150) innerhalb des Hohlraums gedreht werden kann.

4. Anordnung nach Anspruch 3, bei der die Welle an der festen Struktur gehalten ist.

5. Anordnung nach Anspruch 4, bei der die Halterung Lager umfasst.

6. Anordnung nach einem der Ansprüche 1 bis 5, weiterhin umfassend eine Antriebsvorrichtung (170) zum Drehen der zylindrischen Anordnung (150) innerhalb der festen Struktur (110).

7. Anordnung nach Anspruch 6, weiterhin umfassend eine Steuervorrichtung zum Steuern der Antriebsvorrichtung.

8. Anordnung nach einem der Ansprüche 1 bis 7, bei der die feste Struktur (110) mit einem ersten Kanal (116), der sich von der ersten Wassermasse (130) in einen zentralen Hohlraum in der festen Struktur (110) erstreckt, und einem zweiten Kanal (118) versehen ist, der sich von der zweiten Wassermasse (140) in den zentralen Hohlraum in der festen Struktur (110) erstreckt, wobei die Turbineneinheit (120) innerhalb des zentralen Hohlraums in der festen Struktur (110) angeordnet ist.

9. Anordnung nach Anspruch 8, bei der der erste (116) und der zweite (118) Kanal trichterförmig sind, mit einer Querschnittsfläche, die an einem äußeren Abschnitt der festen Struktur (110) breiter ist als an dem mittleren Abschnitt der festen Struktur (110).

10. Anordnung nach einem der Ansprüche 8 bis 9, bei der die feste Struktur (110) mit einem vertikalen Kanal (112) versehen ist, der sich von der Oberseite der festen Struktur (110) bis zu dem zylindrischen Hohlraum in der festen Struktur (110) erstreckt.

11. Anordnung nach Anspruch 10, bei der der vertikale Kanal (112) mit einer Anordnung zum Führen der zylindrischen Anordnung (150) und/oder ihrer Welle (160) während der Montage oder Demontage versehen ist.

12. Anordnung nach einem der Ansprüche 8 bis 11, bei der ein unterer Abschnitt des zentralen Hohlraums in der festen Struktur (110) mit einem Spalt (122) versehen ist, der an seinem Boden ein Abflussloch aufweist, das das Abfließen von Sedimenten in ein unteres Abteil (124) der festen Struktur (110) zulässt.

13. Verfahren zum Bereitstellen einer Energieerzeugungsanordnung (100), die mit Gezeitenwasser betrieben wird, wobei das Verfahren die folgenden Schritte umfasst:
Anbringen einer Turbineneinheit (120) in einer festen Struktur (110), die eine erste (130) und eine zweite (140) Wassermasse trennt, einschließlich Anbringen der Turbineneinheit (120) in einer im Wesentlichen zylindrischen Anordnung (150) mit einer im Wesentlichen horizontalen Achse (180), wobei die zylindrische Anordnung (150) eine Welle (160) aufweist, und
Anordnen der Turbineneinheit (120) derart, dass sie innerhalb der festen Struktur (110) um eine im Wesentlichen horizontale Achse (180) gedreht wird,
wobei die Turbineneinheit (120) einen Rotor mit Turbinenschaufeln und eine Rotorwelle aufweist, die sich dreht, wenn umlaufendes Wasser auf die Turbinenschaufeln des Rotors einwirkt,
wobei die Turbineneinheit (120) weiterhin einen elektrischen Generator enthält, der von der Rotorwelle angetrieben wird,
wobei die Welle (160) der zylindrischen Anordnung (150) hohl ist und eine Verkabelung zum Generator aufweist.

## Revendications

1. Agencement de génération d'énergie (100) alimenté par les marées, comprenant
une unité de turbine (120) montée dans une structure fixe (110) qui sépare une première masse d'eau (130) et une deuxième masse d'eau (140), l'unité de turbine (120) étant agencée pour être tournée à l'intérieur de la structure fixe (110) autour d'un axe sensiblement horizontal (180),
l'unité de turbine (120) étant montée dans un assemblage sensiblement cylindrique (150) avec un axe sensiblement horizontal (180), l'assemblage cylindrique (150) incluant un arbre (160),
l'unité de turbine incluant un rotor avec des aubes de turbine et un arbre de rotor qui tourne lorsque de l'eau s'écoulant autour de celle-ci agit sur les aubes de turbine du rotor,
**caractérisé en ce que**
la turbine inclut en outre un générateur électrique qui est entraîné par l'arbre de rotor, et
l'arbre (160) de l'assemblage cylindrique (150) est creux et comprend un câblage au générateur.

2. Agencement selon la revendication 1,
dans lequel l'unité de turbine (120) a un rendement dépendant d'un sens d'écoulement.

3. Agencement selon la revendication 2,
dans lequel la structure fixe (110) est pourvue d'une cavité sensiblement cylindrique, configurée pour loger l'assemblage cylindrique (150) de telle manière que l'assemblage cylindrique (150) puisse être tourné à l'intérieur de la cavité.

4. Agencement selon la revendication 3,
dans lequel l'arbre est supporté sur la structure fixe.

5. Agencement selon la revendication 4,
dans lequel le support inclut des paliers.

6. Agencement selon l'une des revendications 1 à 5,
comprenant en outre un dispositif d'entraînement (170) pour tourner l'assemblage cylindrique (150) à l'intérieur de la structure fixe (110).

7. Agencement selon la revendication 6,
comprenant en outre un dispositif de commande pour commander le dispositif d'entraînement.

8. Agencement selon l'une des revendications 1 à 7,
dans lequel la structure fixe (110) est pourvue d'un premier conduit (116) qui s'étend depuis la première masse d'eau (130) dans une cavité centrale dans la structure fixe (110), et
un deuxième conduit (118) qui s'étend depuis la deuxième masse d'eau (140) dans la cavité centrale dans la structure fixe (110), l'unité de turbine (120) étant agencée à l'intérieur de la cavité centrale dans la structure fixe (110).

9. Agencement selon la revendication 8,
dans lequel le premier conduit (116) et le deuxième conduit (118) sont en forme d'entonnoir, avec une aire de coupe transversale qui est plus large à une portion extérieure de la structure fixe (110) qu'à la portion centrale de la structure fixe (110).

10. Agencement selon la revendication 8 ou 9,
dans lequel la structure fixe (110) est pourvue d'un conduit vertical (112) qui s'étend depuis le sommet de la structure fixe (110) en descendant jusqu'à la cavité cylindrique dans la structure fixe (110).

11. Agencement selon la revendication 10,
dans lequel le conduit vertical (112) est pourvu d'un agencement pour guider l'assemblage cylindrique (150) et/ou son arbre (160) au cours d'un montage ou d'un démontage.

12. Agencement selon l'une des revendications 8 à 11,
dans lequel une portion inférieure de la cavité centrale dans la structure fixe (110) est pourvue d'un espacement (122) avec un trou de vidange à son fond, permettant une vidange de sédiments dans un compartiment inférieur (124) de la structure fixe (110).

13. Procédé pour fournir un agencement de génération d'énergie (100) alimenté par les marées, le procédé comprenant les étapes de :
le montage d'une unité de turbine (120) dans une structure fixe (110) qui sépare une première masse d'eau (130) et une deuxième masse d'eau (140), incluant le montage de l'unité de turbine (120) dans un assemblage sensiblement cylindrique (150) avec un axe sensiblement horizontal (180), l'assemblage cylindrique (150) incluant un arbre (160),
et
l'agencement de l'unité de turbine (120) pour être tournée à l'intérieur de la structure fixe (110) autour d'un axe sensiblement horizontal (180),
l'unité de turbine (120) incluant un rotor avec des aubes de turbine et un arbre de rotor qui tourne lorsque de l'eau s'écoulant autour de celle-ci agit sur les aubes de turbine du rotor,
l'unité de turbine (120) incluant en outre un générateur électrique qui est entraîné par l'arbre de rotor,
dans lequel l'arbre (160) de l'assemblage cylindrique (150) est creux et comprend un câblage au générateur.
